# EUROPEAN PATENT APPLICATION

(11) **EP 4 561 185 A1**
(43) Date of publication of application: **28.05.2025**
(21) Application number: 23866920.4
(22) Date of filing: 27.04.2023
(51) Int. Cl.: H04W 48/08

(54) **ACCESS NETWORK AND COMMUNICATION SYSTEM**

(30) Priority: 19.09.2022 CN 202211137368
(71) Applicant: ZTE Corporation, Shenzhen, Guangdong 518057 (CN)
(72) Inventor: DAI, Bo, Shenzhen, Guangdong 518057 (CN); XIE, Feng, Shenzhen, Guangdong 518057 (CN); HU, Liujun, Shenzhen, Guangdong 518057 (CN); YU, Guanghui, Shenzhen, Guangdong 518057 (CN); HUANG, He, Shenzhen, Guangdong 518057 (CN); YANG, Li, Shenzhen, Guangdong 518057 (CN)
(74) Representative: Aipex B.V.
(86) International application number: PCT/CN2023/091290
(87) International publication number: WO 2024/060623

(57) **Abstract**

Provided are an access network and a communication system. The access network includes a centralized unit, CU, and a distributed unit, DU, where the DU is connected to the CU; and the CU includes at least one type of CU, and the DU includes at least one type of DU. When the CU and the DU are each of only one type, the CU and the DU correspond to different types; or the CU includes multiple types of CUs; or the DU includes multiple types of DUs.

## Description

### CROSS-REFERENCE TO RELATED APPLICATION(S)

This application claims priority to Chinese Patent Application No. 202211137368.3 filed Sep. 19, 2022, the disclosure of which is incorporated herein by reference in its entirety.

### TECHNICAL FIELD

The present application relates to the field of communication technology and, in particular, to an access network and a communication system.

### BACKGROUND

With the evolution of standards and the development of technologies, more and more researches on the vision, requirements, and key technologies of the 6th-generation (6G) mobile communication technology are published. A 6G communication system introduces one or more functions of intelligence, computing power, security, evaluation of wireless network quality (such as quality of service (QoS) and quality of equipment (QoE)), management of endogenous data (data about which a radio access network interacts with a core network without the participation of a terminal, such as intelligence-related information and sensing information), sensing and communication, and energy supply. When network standards evolve to 6G, how to construct 6G networking is an urgent technical problem to be solved in the industry.

### SUMMARY

The following is a summary of the subject matter described herein in detail. The summary is not intended to limit the scope of the claims.

An object of embodiments of the present application is to provide an access network and a communication system based on 6G network standards.

In a first aspect, an embodiment of the present application provides an access network. The access network includes a centralized unit (CU) and a distributed unit (DU), where the DU is connected to the CU.

The CU includes at least one type of CU, and the DU includes at least one type of DU.

When the CU and the DU are each of only one type, the CU and the DU correspond to different types.

Alternatively, the CU includes multiple types of CUs.

Alternatively, the DU includes multiple types of DUs.

In a second aspect, an embodiment of the present application provides a communication system including a core network and the access network as described in the first aspect, where the access network is connected to the core network.

The access network and the communication system according to the embodiments of the present application follow a logical system of separation of the CU and the DU in the previous 5G communication network, the CU may include multiple types of CUs, and the DU may include multiple types of DUs. If the CU and the DU are each of only one type, the CU and the DU correspond to different types; or the CU includes multiple types of CUs; or the DU includes multiple types of DUs. The solutions in the embodiments of the present application effectively improve the flexibility and functionality of the communication system and can adapt to requirements of 6G standards and achieve the smooth evolution towards 6G network standards.

### BRIEF DESCRIPTION OF DRAWINGS

The drawings are used to provide a further understanding of technical solutions of the present application and constitute part of the specification. The drawings are intended to illustrate the technical solutions of the present application in conjunction with embodiments of the present application and not to limit the technical solutions of the present application.
FIG. 1 is a structural diagram of a communication system according to an embodiment of the present application.
FIG. 2 is another structural diagram of a communication system according to an embodiment of the present application.
FIGS. 3 to 30 are structural diagrams of communication systems according to Examples 1 to 28 of the present application.

### DETAILED DESCRIPTION

The present application is further described below in conjunction with the accompanying drawings and embodiments. The embodiments described herein are not to be construed as limiting the present application. All other embodiments obtained by those having ordinary skill in the art without creative work are within the scope of the present application.

"Some embodiments" involved in the following description describe a subset of all possible embodiments. It is to be understood that "some embodiments" may be the same subset or different subsets of all possible embodiments and may be combined with each other if not in conflict.

Unless otherwise defined, all technical and scientific terms used herein have the same meanings as those commonly understood by those skilled in the art to which the present application pertains. The terms used herein are only for the purpose of describing embodiments of the present application and are not intended to limit the present application.

Before embodiments of the present application are described in detail, nouns and terms involved in the embodiments of the present application are described. The following interpretations are applicable to the nouns and terms involved in the embodiments of the present application.

A core network (CN) is one of three major components of a communication network. The core network serves as a "management hub" and is responsible for managing data, sorting the data, and determining destinations of the data. The processing and distribution of data, that is, "route switching", is the essence of the core network.

A radio access network (RAN) is a part of a mobile communication system. The RAN is an implementation of radio access technology. The RAN exists between a device (such as a mobile phone, a computer, or any remotely controlled machine) and the core network to provide a communication connection between the device and the core network. A 5G access network includes a NodeB node, and the NodeB supports a deployment manner in which a centralized unit (CU) and a distributed unit (DU) are separated. In a separated NodeB, radio resource control (RRC), Packet Data Convergence Protocol (PDCP), and Service Data Adaptation Protocol (SDAP) protocol stacks are disposed in the CU and the other protocol stacks (physical layer (PHY), media access control (MAC), and Radio Link Control (RLC)) are disposed in the DU. The CU mainly includes non-real-time radio higher-layer protocol stack functions and also supports the sinking of some functions of the core network and the deployment of edge application traffic. The DU mainly handles a physical layer function and a layer 2 function that require real-time processing. That is to say, the separated CU and DU are distinguished according to whether contents are processed in real time. Secondly, under the CU-DU architecture, the CU further performs the separation of a control plane and a user plane, is separated into a centralized unit control plane (CU-CP) and a centralized unit user plane (CU-UP), and supports connections between multiple CU-UPs and one CU-CP.

An Access and Mobility Management Function (AMF) supports user terminals with different mobility management requirements. Main tasks include non-access stratum (NAS) signaling terminals, NAS signaling security, access stratum security control, signaling between nodes of the core network for mobility between 3rd Generation Partnership Project (3 GPP) access networks, reachability of a user terminal in an idle mode (including control and execution of paging retransmission), registration region management, support of intra-system and inter-system mobility, access authentication, access authorization (including roaming rights check), mobility management and control (subscription and policy), support of network slicing, and Session Management Function (SMF) selection.

An SMF can support customized mobility management schemes together with the AMF, for example, a "Mobile Initiated Connection Only" (MICO) or RAN enhancement function, such as an "RRC inactive" state. Main tasks include session management, allocation and management of Internet Protocol (IP) addresses of user terminals, User Plane Function (UPF) selection and control, flow control configuration at a UPF, traffic routing to an appropriate destination, policy execution and QoS control parts, and downlink data notification.

A UPF performs main tasks including anchor points for intra-system and inter-system mobility, external PDU session points connected to a data network, packet routing and forwarding, packet inspection and user plane policy rule execution parts, traffic usage reporting, an uplink classifier (supporting the routing of traffic flows to a data network), branching points supporting a multi-homed PDU session, QoS handling for a user plane (for example, packet filtering, gating, and uplink/downlink rate enforcement), uplink traffic verification (service data flow (SDF) to QoS flow mapping), downlink packet buffering, and downlink data notification triggering.

A network repository function (NRF) provides support for network function (NF) service management, including registration, deregistration, authorization, and discovery.

A network exposure function (NEF) provides external exposure of network function capabilities. The external exposure may be divided into monitoring capabilities, provisioning capabilities, application effects of traffic routing, and policy/billing capabilities.

Unified data management (UDM): A 5G core network (5GC) supports a data storage system architecture for computing and storage separation. A Unified Data Repository (UDR) is a main database. An Unstructured Data Storage Function (UDSF) is introduced to store dynamic data.

A user terminal is a device with radio transceiving functions and may be deployed on land (for example, indoor or outdoor, handheld, wearable, or in-vehicle), may be deployed on the water surface (such as a ship), or may be deployed in the air (such as an aircraft, balloon, or satellite). The user terminal may be a mobile phone, a Pad, a computer with the radio transceiving functions, a virtual reality (VR) terminal, an augmented reality (AR) terminal, a wireless terminal in industrial control, a wireless terminal in self-driving, a wireless terminal in remote medical services, a wireless terminal in a smart grid, a wireless terminal in transportation safety, a wireless terminal in a smart city, or a wireless terminal in smart home. Application scenarios are not limited in the embodiments of the present application. The user terminal may sometimes be referred to as a terminal, an access terminal, a user equipment (UE) unit, a UE station, a mobile station, a mobile platform, a remote station, a remote terminal, a mobile device, a UE terminal, a wireless communication device, a UE agent, or a UE apparatus.

A service-based architecture (SBA) is an important feature of a 5G mobile communication system. In conjunction with network characteristics and technical development trends of a mobile core network, network functions are divided into several reusable "services". The "services" communicate by using lightweight interfaces. The SBA aims to achieve the high efficiency, software basis, and openness of the 5G system. To adapt to the development of 5G networks, the RAN proposes a base station based on a distributed architecture of CUs and DUs. An NG interface is an interface between a next-generation radio access network (NG-RAN) and the core network to transmit control signaling and user data between the NG-RAN and the core network. The NG interface is divided into a control plane and a user plane. Function nodes of the 5G core network include the AMF, SMF, UPF, UDM, NRF, and NEF, where AMF, SMF, and UPF network elements are related to the access network.

With the evolution of standards and the development of technologies, more and more researches on the vision, requirements, and key technologies of 6G are published. A 6G communication system introduces one or more functions of intelligence, computing power, security, evaluation of wireless network quality (such as QoS and QoE), management of endogenous data (data about which a radio access network interacts with a core network without the participation of a terminal, such as intelligence-related information and sensing information), sensing and communication, and energy supply. When networks evolve to the 6G, how to implement flexible networking in the 6G to ensure the smooth evolution from 5G/4G networks to the 6G is to be solved urgently. In view of this, embodiments of the present application provide an access network and a communication system based on 6G network standards.

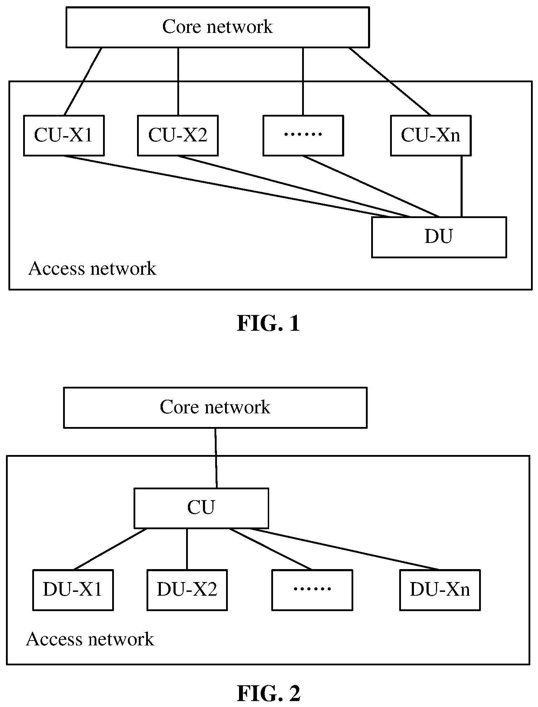

FIG. 1 is a schematic diagram illustrating the architecture of a communication network according to an embodiment of the present application. Referring to FIG. 1, a communication system includes a core network and an access network, where the access network is connected to the core network.

As shown in FIG. 1, the access network according to the embodiment of the present application includes a CU and a DU, where the DU is connected to the CU, and the CU includes multiple types of CUs. In the example of FIG. 1, the CU includes CU-X1, CU-X2, ..., and CU-Xn, where n CUs may correspond to one or more types.

It is to be noted that the types described in the embodiment of the present application may be distinguished according to network types. The network types here may also be referred to as network standard types. For example, the network types include 5G network standards, 6G network standards, or network standards adopted by future mobile communication systems. For example, the access network includes multiple CUs, and according to the network types, the CUs in the access network include a 6G CU and a 5G CU.

In a possible embodiment, the CU includes the 6G CU and the 5G CU, the DU includes a 6G DU, and the 6G DU is separately connected to the 6G CU and the 5G CU so that CU devices in accordance with 6G and 5G standards are deployed in a mixed manner in the access network, so as to implement the smooth evolution of the access network from 5G networking to 6G networking.

In a possible embodiment, the CU includes the 6G CU and the 5G CU, the 6G CU includes at least one 6G CU-CP, the 5G CU includes a 5G CU-UP, and the DU includes the 6G DU. The at least one 6G CU-CP is connected to the 5G CU-UP, and the 6G DU is separately connected to the at least one 6G CU-CP and the 5G CU-UP. That is to say, the CU-CP adopts a 6G network standard, and the CU-UP adopts a 5G network standard so that CU devices in accordance with 6G and 5G standards are deployed in a mixed manner in the access network, so as to implement the smooth evolution of the access network from 5G networking to 6G networking.

In a possible embodiment, the CU includes the 6G CU and the 5G CU, the DU includes the 6G DU, the 6G CU includes at least one 6G CU-UP, the 5G CU includes a 5G CU-CP, the at least one 6G CU-UP is connected to the 5G CU-CP, and the 6G DU is separately connected to the at least one 6G CU-UP and the 5G CU-CP. That is to say, the CU-CP adopts the 5G network standard, and the CU-UP adopts the 6G network standard.

In a possible embodiment, the CU includes the 6G CU and the 5G CU, the DU includes the 6G DU, the 6G CU includes at least one 6G CU-CP and at least one 6G CU-UP, the 5G CU includes the 5G CU-CP and the 5G CU-UP, the at least one 6G CU-CP is connected to the at least one 6G CU-UP, the 5G CU-CP is connected to the 5G CU-UP, and the 6G DU is separately connected to the at least one 6G CU-CP, the at least one 6G CU-UP, the 5G CU-CP, and the 5G CU-UP. That is to say, in the access network, 5G and 6G CU-CPs coexist and 5G and 6G CU-UPs coexist. Optionally, the at least one 6G CU-CP is also connected to the 5G CU-CP; and/or the at least one 6G CU-UP is also connected to the 5G CU-UP.

In a possible embodiment, the CU includes the 6G CU and the 5G CU, and the DU includes a 5G DU, where the 5G DU is connected to the 6G CU and the 5G CU.

In a possible embodiment, the 6G CU includes at least one 6G CU-CP, the 5G CU includes the 5G CU-UP, the DU includes the 5G DU, the at least one 6G CU-CP is connected to the 5G CU-UP, and the 5G DU is separately connected to the at least one 6G CU-CP and the 5G CU-UP.

In a possible embodiment, the 6G CU includes at least one 6G CU-UP, the 5G CU includes the 5G CU-CP, the DU includes the 5G DU, the at least one 6G CU-UP is connected to the 5G CU-CP, and the 5G DU is separately connected to the at least one 6G CU-UP and the 5G CU-CP.

In a possible embodiment, the CU includes the 6G CU and the 5G CU, the DU includes the 5G DU, the 6G CU includes at least one 6G CU-CP and at least one 6G CU-UP, the 5G CU includes the 5G CU-CP and the 5G CU-UP, the at least one 6G CU-CP is connected to the at least one 6G CU-UP, the 5G CU-CP is connected to the 5G CU-UP, and the 5G DU is separately connected to the at least one 6G CU-CP, the at least one 6G CU-UP, the 5G CU-CP, and the 5G CU-UP.

It is to be noted that during specific implementations, the access network may include multiple 6G CU-CPs and/or multiple 6G CU-UPs. When the access network includes multiple 6G CU-CPs, the multiple 6G CU-CPs may be configured to implement different functions in a control plane. Similarly, when the access network includes multiple 6G CU-UPs, the multiple 6G CU-UPs may be configured to implement different functions in a user plane.

It is to be understood that the 6G CU may not be divided into the 6G CU-CP and the 6G CU-UP. In this case, the 6G CU implements functions of both the control plane and the user plane. The access network may include multiple 6G CUs, and the multiple 6G CUs may correspond to various different functions.

It is to be understood that different functions (for example, intelligence, computing power, sensing, and energy transmission) in the communication system may correspond to different control planes. Therefore, a separate CU may be set up for each function to perform management. In this case, in addition to the network standards, the types described in the embodiment of the present application may be distinguished according to functions, according to information types, according to traffic types, or according to protocol stack types.

That is to say, each type of CU corresponds to one function, each type of CU corresponds to one service, each type of CU corresponds to one task, each type of CU corresponds to one protocol stack, each type of CU corresponds to one data type, or each type of CU corresponds to one network standard.

It is to be understood that as for the types described in the embodiment of the present application, the CUs may be divided into an external type and an internal type according to whether the CU interacts with a UE or is related to a communication service, or is related to an external service provided by the core network. That is to say, the CU may include an external type of CU and an internal type of CU. The external type of CU is configured to perform information interaction with the UE, and the internal type of CU performs no information interaction with the UE; or the external type of CU is related to the communication service, and the internal type of CU is related to another service; or the external type of CU is related to the external service provided by the core network, and the internal type of CU is related to a UE service.

For example, the number of types of the CU may be 2, 3, 4, 5, or 6.

For example, the CU includes two types of CUs, one type is the internal type of CU, and the other is the external type of CU, where the external type of CU performs information interaction with the UE, and the internal type of CU performs no information interaction with the UE.

For example, the CU includes two types of CUs, one type is the internal type of CU, and the other is the external type of CU, where the external type of CU is related to the communication service, and the internal type of CU is related to another service.

For example, the CU includes two types of CUs, one type is the internal type of CU, and the other is the external type of CU, where the external type of CU is related to the external service provided by the core network, and the internal type of CU is related to the UE service.

For example, the CU includes two types of CUs, one type is a main CU, and the other is an auxiliary CU, where the auxiliary CU includes one or more auxiliary CUs.

For example, the CU includes two types of CUs, one type is a CU with a first function, and the other is a CU with a second function, where the first function or the second function includes at least one or more of a mobility management function, a security/authentication/encryption function, a traffic quality identification function, a routing management function, an intelligence management function, a sensing management function, a computing power management function, a traffic transmission management function, an energy transmission management function, an external service management function, a multi-connection management function, a PDCP function, an RLC function, or an MAC function.

For example, the number of types of the CU is 3. For example, the access network includes a sensing CU, an intelligent CU, and a communication CU; a sensing CU, a computing CU, and a communication CU; a CU associated with external intelligence of the core network, a CU associated with external sensing of the core network, and a communication CU; the main CU, an auxiliary CU-CP, and an auxiliary CU-UP; the main CU, an auxiliary external CU, and an auxiliary internal CU; the CU-CP, the CU-UP, and an external CU; or the CU-CP, the CU-UP, and the CU with the first function.

For example, the number of types of the CU is 4. For example, the access network includes the sensing CU, the intelligent CU, the computing CU, and the communication CU; the CU associated with external intelligence of the core network, the CU associated with external sensing of the core network, a CU associated with external computing of the core network, and the communication CU; the main CU, an auxiliary intelligent CU, an auxiliary sensing CU, and an auxiliary communication CU; the CU-CP, the CU-UP, the intelligent CU, and the sensing CU; or the CU-CP, the CU-UP, the CU with the first function, and the CU with the second function.

For example, the number of types of the CU is 5. For example, the access network includes the main CU, the auxiliary intelligent CU, the auxiliary sensing CU, the auxiliary communication CU, and an auxiliary computing CU; the main CU, an auxiliary CU associated with external intelligence of the core network, an auxiliary CU associated with external sensing of the core network, an auxiliary CU associated with external computing of the core network, and the auxiliary communication CU; the main CU, the auxiliary CU-CP, the auxiliary CU-UP, the auxiliary intelligent CU, and the auxiliary sensing CU; the main CU, the auxiliary CU-CP, the auxiliary CU-UP, an auxiliary computing CU, and the auxiliary sensing CU; the CU-CP, the CU-UP, the intelligent CU, the sensing CU, and the computing CU; the CU associated with external intelligence of the core network, the CU associated with external sensing of the core network, the CU associated with external computing of the core network, an intelligent CU associated with the access network, and the communication CU; or the CU-CP, the CU-UP, the CU with the first function, the CU with the second function, and a CU with a third function.

For example, the number of types of the CU is 6. For example, the access network includes the main CU, the auxiliary intelligent CU, the auxiliary sensing CU, the auxiliary CU-CP, the auxiliary CU-UP, and the auxiliary computing CU; the main CU, the auxiliary CU associated with external intelligence of the core network, the auxiliary CU associated with external sensing of the core network, the auxiliary CU associated with external computing of the core network, the auxiliary CU-CP, and the auxiliary CU-UP; the CU associated with external intelligence of the core network, the CU associated with external sensing of the core network, the CU associated with external computing of the core network, the intelligent CU associated with the access network, the CU-CP, and the CU-UP; or the CU-CP, the CU-UP, the CU with the first function, the CU with the second function, the CU with the third function, and a CU with a fourth function.

It is to be noted that the main CU is a centralized control node for the auxiliary CU, or the main CU is an upper-layer node of the auxiliary CU. The auxiliary CU may be considered as a sub-CU of the main CU. Additionally, the main CU and the auxiliary CU may correspond to different functions.

FIG. 2 is a schematic diagram illustrating the architecture of a communication network according to an embodiment of the present application. Referring to FIG. 2, a communication system includes a core network and an access network, where the access network is connected to the core network.

As shown in FIG. 2, the access network according to the embodiment of the present application includes a CU and a DU, where the DU is connected to the CU, and the DU includes multiple types of DUs. In the example of FIG. 2, the DU includes DU-X1, DU-X2, ..., and DU-Xn, where n DUs may correspond to one or more types.

Specifically, multiple DUs included in the access network may be divided according to network types. That is, the access network may include DUs in accordance with multiple network standards, where the network standards include 5G network standards, 6G network standards, or network standards adopted by future mobile communication systems. For example, the access network includes multiple DUs, and according to the network types, the DUs in the access network include a 6G DU and a 5G DU. In this manner, DU devices in accordance with 6G and 5G standards are deployed in a mixed manner in the access network, so as to implement the smooth evolution of the access network from 5G networking to 6G networking.

In a possible embodiment, considering that a control plane and a user plane may correspond to different coverage ranges in the future, the control plane may be located within a larger coverage range, and the user plane may be located in a more focused small range, functions of the control plane and the user plane of the DU may be separated. Therefore, the 6G DU in FIG. 2 may include a 6G DU-CP and a 6G DU-UP.

In a possible embodiment, the CU includes a 6G CU, and the 6G CU includes a 6G CU-CP and a 6G CU-UP; and the DU includes the 6G DU and the 5G DU, where the 6G DU includes the 6G DU-CP and the 6G DU-UP. The 6G DU-CP is connected to the 6G CU-CP, and the 6G DU-UP is connected to the 6G CU-UP. In this embodiment, both the 6G CU and the 6G DU adopt an architecture in which the control plane and the user plane are separated. Further, the 6G DU-CP is connected to the core network via a 5G CU or the 6G CU, and the 6G DU-UP is connected to the core network.

In a possible embodiment, the DU includes the 6G DU and the 5G DU, where the 6G DU includes the 6G DU-CP and the 6G DU-UP, the CU includes the 5G CU, the 5G CU includes a 5G CU-CP and a 5G CU-UP, the 6G DU-CP is connected to the 5G CU-CP, and the 6G DU-UP is connected to the 5G CU-UP. In this embodiment, both the 5G CU and the 6G DU adopt the architecture in which the control plane and the user plane are separated.

It is to be understood that the multiple DUs in the access network may be distinguished according to functions, according to information types, according to traffic types, or according to protocol stack types.

For example, each type of DU corresponds to one function, each type of DU corresponds to one service, each type of DU corresponds to one task, each type of DU corresponds to one protocol stack, each type of DU corresponds to one data type, or each type of DU corresponds to one network standard.

It is to be understood that as for the types described in the embodiment of the present application, the DUs may be divided into an external type and an internal type according to whether the DU interacts with a UE or is related to a communication service, or is related to an external service provided by the core network. In this case, the DU includes an external type of DU and an internal type of DU. The external type of DU is configured to perform information interaction with the UE, and the internal type of DU performs no information interaction with the UE; or the external type of DU is related to the communication service, and the internal type of DU is not related to the communication service; or the external type of DU is related to the external service provided by the core network, and the internal type of DU is related to a UE service.

For example, the number of types of the DU may be 2, 3, 4, 5, or 6.

For example, the DU includes two types of DUs, one type is the internal type of DU, and the other is the external type of DU, where the external type of DU performs information interaction with the UE, and the internal type of DU performs no information interaction with the UE.

For example, the DU includes two types of DUs, one type is the internal type of DU, and the other is the external type of DU, where the external type of DU is related to the communication service, and the internal type of DU is related to another service.

For example, the DU includes two types of DUs, one type is the internal type of DU, and the other is the external type of DU, where the external type of DU is related to the external service provided by the core network, and the internal type of DU is related to the UE service.

For example, the DU includes two types of DUs, one type is an internal type of DU-CP, and the other is an external type of DU-UP.

For example, the DU includes two types of DUs, one type is a main DU, and the other is an auxiliary DU, where the auxiliary DU includes one or more auxiliary DUs.

For example, the DU includes two types of DUs, one type is a DU with a first function, and the other is a DU with a second function, where the first function or the second function includes at least one or more of a mobility management function, a security/authentication/encryption function, a traffic quality identification function, a routing management function, an intelligence management function, a sensing management function, a computing power management function, a traffic transmission management function, an energy transmission management function, an external service management function, a multi-connection management function, a PDCP function, an RLC function, or an MAC function.

For example, the number of types of the DU is 3. For example, the access network includes a sensing DU, an intelligent DU, and a communication DU; a sensing DU, a computing DU, and a communication DU; a DU associated with external intelligence of the core network, a DU associated with external sensing of the core network, and a communication DU; the main DU, an auxiliary DU-CP, and an auxiliary DU-UP; the main DU, an auxiliary external DU, and an auxiliary internal DU; the DU-CP, the DU-UP, and an external DU; or the DU with the first function, the DU with the second function, and a DU with a third function.

For example, the number of types of the DU is 4. For example, the access network includes the sensing DU, the intelligent DU, the computing DU, and the communication DU; the DU associated with external intelligence of the core network, the DU associated with external sensing of the core network, a DU associated with external computing of the core network, and the communication DU; the main DU, an auxiliary intelligent DU, an auxiliary sensing DU, and an auxiliary communication DU; the DU-CP, the DU-UP, the intelligent DU, and the sensing DU; or the DU with the first function, the DU with the second function, the DU with the third function, and a DU with a fourth function.

For example, the number of types of the DU is 5. For example, the access network includes the main DU, the auxiliary intelligent DU, the auxiliary sensing DU, the auxiliary communication DU, and an auxiliary computing DU; the main DU, an auxiliary DU associated with external intelligence of the core network, an auxiliary DU associated with external sensing of the core network, an auxiliary DU associated with external computing of the core network, and the auxiliary communication DU; the main DU, the auxiliary DU-CP, the auxiliary DU-UP, the auxiliary intelligent DU, and the auxiliary sensing DU; the main DU, the auxiliary DU-CP, the auxiliary DU-UP, an auxiliary computing DU, and the auxiliary sensing DU; the DU-CP, the DU-UP, the intelligent DU, the sensing DU, and the computing DU; the DU associated with external intelligence of the core network, the DU associated with external sensing of the core network, the DU associated with external computing of the core network, an intelligent DU associated with the access network, and the communication DU; or the DU with the first function, the DU with the second function, the DU with the third function, the DU with the fourth function, and a DU with a fifth function.

For example, the number of types of the DU is 6. For example, the access network includes the main DU, the auxiliary intelligent DU, the auxiliary sensing DU, the auxiliary DU-CP, the auxiliary DU-UP, and the auxiliary computing DU; the main DU, the auxiliary DU associated with external intelligence of the core network, the auxiliary DU associated with external sensing of the core network, the auxiliary DU associated with external computing of the core network, the auxiliary DU-CP, and the auxiliary DU-UP; the DU associated with external intelligence of the core network, the DU associated with external sensing of the core network, the DU associated with external computing of the core network, the intelligent DU associated with the access network, the DU-CP, and the DU-UP; or the DU with the first function, the DU with the second function, the DU with the third function, the DU with the fourth function, the DU with the fifth function, and a DU with a sixth function.

It is to be noted that the main DU is a centralized control node for the auxiliary DU, or the main DU is an upper-layer node of the auxiliary DU. The auxiliary DU may be considered as a sub-DU of the main DU. Additionally, the main DU and the auxiliary DU may correspond to different functions.

It is to be noted that the external CU or DU may be a 5G CU or DU or a CU or DU with a similar 5G function, and the internal CU or DU is a CU or DU with a new function. For example, the CU controls the DU to perform sensing without the participation of the UE, intelligence management (or computing power management) inside a cell or node or base station or cell cluster or a base station cluster, or intelligence management (or computing power management) between multiple nodes or multiple base stations.

It is to be noted that the external CU may include the CU-CP and the CU-UP.

It is to be noted that each type of CU includes one or more CUs, and each type of DU includes one or more DUs.

It is to be noted that when the CU and the DU in the access network are each of only one type, the CU and the DU correspond to different types. For example, in the access network, the CU is of only one type, 5G CU, the DU is of only one type, 6G DU, and the CU and the DU correspond to different network standard types.

It is to be noted that the access network may include multiple types of CUs and multiple types of DUs. The number of types of the CU and the number of types of the DU may be the same; or the number of types of the DU is smaller than the number of types of the CU. Each type of DU is connected to at least one type of CU.

It is to be understood that when the CU corresponds to only one type, the DU may correspond to multiple types. For example, the CU is of only one type, 5G CU, and the DU may be of two types, 5G DU and 6G DU; or the CU is of only one type, 6G CU, and the DU may be of two types, 5G DU and 6G DU.

It is to be understood that when the DU corresponds to only one type, the CU may correspond to multiple types.

It is to be noted that the core network in the communication system according to the embodiment of the present application may include at least one of a 5G core network element or a 6G core network element. Various types of core network elements are connected via a service bus.

For example, the 5G core network element includes at least one of a 5G AMF, a 5G UPF, a 5G SMF, 5G UDM, a 5G NRF, or a 5G NEF.

For example, the 6G core network element includes at least one of a 6G AMF, a 6G UPF, a 6G SMF, 6G UDM, a 6G NRF, or a 6G NEF.

It is to be noted that the 6G AMF may be of multiple types, where one type of AMF corresponds to one type of CU, one type of AMF corresponds to multiple types of CUs, or multiple types of AMFs correspond to one type of CU. For example, an intelligence (computing power)-related AMF corresponds to an intelligence (computing power)-related CU, a sensing-related AMF corresponds to a sensing-related CU, an intelligence (computing power)-related AMF and a sensing-related AMF correspond to one type of CU, the 6G AMF includes a function of the 5G AMF and a function of the 6G AMF and may be connected to the 6G CU and the 5G CU, or a 6G core network includes the 6G AMF and the 5G AMF which are connected to the 6G CU and the 5G CU respectively.

It is to be noted that the 6G UPF may be of multiple types, where one type of UPF corresponds to one type of DU, one type of UPF corresponds to multiple types of DUs, or multiple types of UPFs correspond to one type of DU. For example, an intelligence (computing power)-related UPF corresponds to an intelligence (computing power)-related DU, a sensing-related UPF corresponds to a sensing-related DU, an intelligence (computing power)-related UPF and a sensing-related UPF correspond to one type of DU, the 6G UPF includes a function of the 5G UPF and a function of the 6G UPF and may be connected to the 6G DU and the 5G DU, or the 6G core network includes the 6G UPF and the 5G UPF which are connected to the 6G DU and the 5G DU respectively.

The technical solutions of the present application are described below by way of examples.

### Example 1

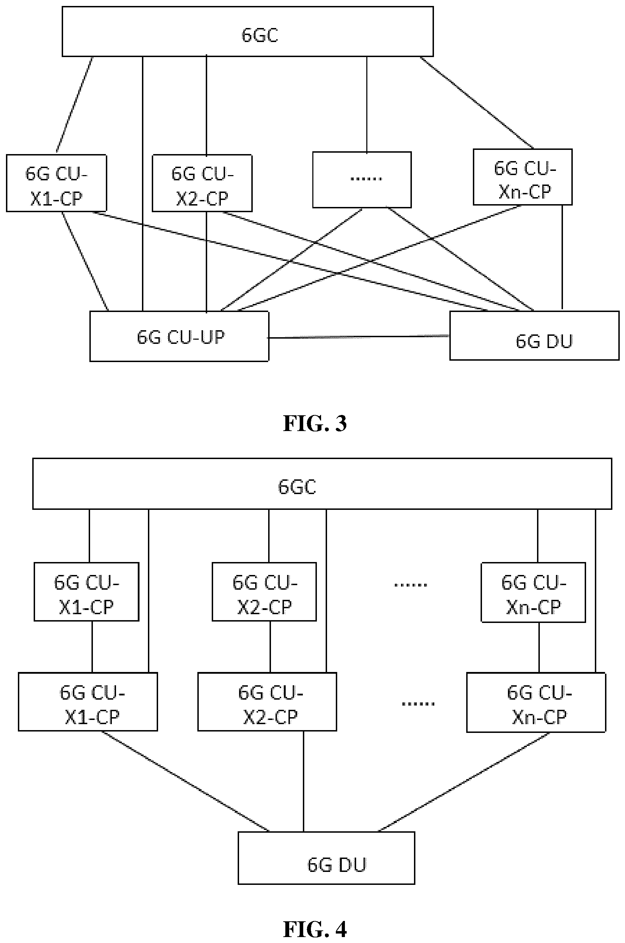

Reference is made to FIG. 3 which is a structural diagram of a communication system according to Example 1 of the present application. In the communication system shown in FIG. 3, a core network is a 6G core network (6GC), and an access network includes a 6G DU, a 6G CU-UP, and a 6G CU-CP. Further, the number of 6G CU-CPs is n (n > 1), and n 6G CU-CPs may be referred to as 6G CU-X1-CP, 6G CU-X2-CP, ..., and 6G CU-Xn-CP, respectively. The 6G CU-UP is connected to each 6G CU-CP, the 6G DU is connected to each 6G CU-CP, the 6G DU is connected to the 6G CU-UP, and the 6G CU-UP and each 6G CU-CP is connected to the 6GC.

The n 6G CU-CPs in Example 1 may correspond to r types, where 1 < r ≤ n. Each type of 6G CU-CP corresponds to one function, each type of 6G CU-CP corresponds to one service, each type of 6G CU-CP corresponds to one task, each type of 6G CU-CP corresponds to one protocol stack, or each type of 6G CU-CP corresponds to one data type.

It is to be noted that in FIG. 3, the 6GC may be replaced with a 5G core network (5GC), the 6G DU may be replaced with a 5G DU, the 6G CU-UP may be replaced with a 5G CU-UP, or any one of the n 6G CU-CPs may be replaced with a 5G CU-CP.

### Example 2

Reference is made to FIG. 4 which is a structural diagram of a communication system according to Example 2 of the present application. In the communication system shown in FIG. 4, a core network is a 6GC, and an access network includes a 6G DU, a 6G CU-UP, and a 6G CU-CP. Further, the number of 6G CU-UPs is n (n > 1), and n 6G CU-UPs may be referred to as 6G CU-X1-UP, 6G CU-X2-UP, ..., and 6G CU-Xn-UP, respectively; and the number of 6G CU-CPs is n (n > 1), and n 6G CU-CPs may be referred to as 6G CU-X1-CP, 6G CU-X2-CP, ..., and 6G CU-Xn-CP, respectively. The n 6G CU-UPs are connected in one-to-one correspondence to the n 6G CU-CPs, the 6G DU is separately connected to each 6G CU-UP and each 6G CU-CP, and each 6G CU-UP and each 6G CU-CP are connected to the 6GC.

The n 6G CU-UPs/6G CU-CPs in Example 2 may correspond to r types, where 1 < r ≤ n. Each type of 6G CU-UP/6G CU-CP corresponds to one function, each type of 6G CU-UP/6G CU-CP corresponds to one service, each type of 6G CU-UP/6G CU-CP corresponds to one task, each type of 6G CU-UP/6G CU-CP corresponds to one protocol stack, or each type of 6G CU-UP/6G CU-CP corresponds to one data type.

It is to be noted that in FIG. 4, the 6GC may be replaced with a 5GC, the 6G DU may be replaced with a 5G DU, any one of the n 6G CU-UPs may be replaced with a 5G CU-UP, or any one of the n 6G CU-CPs may be replaced with a 5G CU-CP.

### Example 3

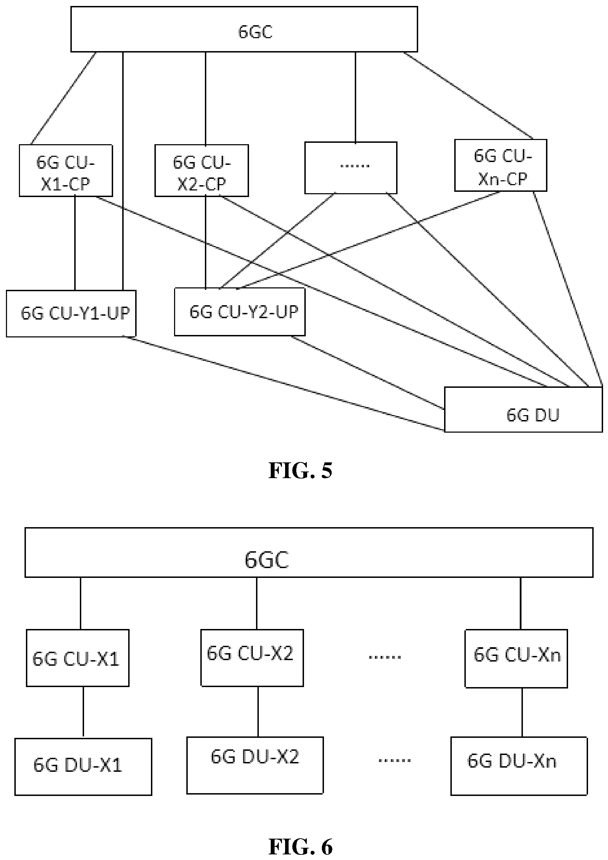

Reference is made to FIG. 5 which is a structural diagram of a communication system according to Example 3 of the present application. In the communication system shown in FIG. 5, a core network is a 6GC, and an access network includes a 6G DU, a 6G CU-UP, and a 6G CU-CP. Further, the number of 6G CU-UPs is m (m > 1), and m 6G CU-UPs include 6G CU-Y1-UP and 6G CU-Y2-UP; and the number of 6G CU-CPs is n (n > m), and n 6G CU-CPs may be referred to as 6G CU-X1-CP, 6G CU-X2-CP, ..., and 6G CU-Xn-CP, respectively. 6G CU-Y1-UP is connected to 6G CU-X1-CP, 6G CU-Y2-UP is separately connected to 6G CU-X2-CP, ..., and 6G CU-Xn-CP, the 6G DU is separately connected to each 6G CU-UP and each 6G CU-CP, and each 6G CU-UP and each 6G CU-CP are connected to the 6GC.

The n 6G CU-CPs in Example 3 may correspond to r types, where 1 < r ≤ n. Each type of 6G CU-CP corresponds to one function, each type of 6G CU-CP corresponds to one service, each type of 6G CU-CP corresponds to one task, each type of 6G CU-CP corresponds to one protocol stack, or each type of 6G CU-CP corresponds to one data type.

One 6G CU-UP in Example 3 is connected to one or more 6G CU-CPs, that is to say, multiple 6G CU-CPs may share one 6G CU-UP.

It is to be noted that in Example 3, the 6GC may be replaced with a 5GC, the 6G DU may be replaced with a 5G DU, any one of 6G CU-Y1-UP and 6G CU-Y2-UP may be replaced with a 5G CU-UP, or any one of 6G CU-X1-CP, 6G CU-X2-CP, ..., or 6G CU-Xn-CP may be replaced with a 5G CU-CP.

### Example 4

Reference is made to FIG. 6 which is a structural diagram of a communication system according to Example 4 of the present application. In the communication system shown in FIG. 6, a core network is a 6GC, and an access network includes n 6G DUs and n 6G CUs, where the n 6G DUs are 6G DU-X1, 6G DU-X2, ..., and 6G DU-Xn respectively, the n 6G CUs are 6G CU-X1, 6G CU-X2, ..., and 6G CU-Xn respectively, the n 6G DUs are connected in one-to-one correspondence to the n 6G CUs, and each 6G CU is connected to the 6GC.

The n 6G CUs/DUs in Example 4 may correspond to r types, where 1 < r ≤ n. Each type of 6G CU corresponds to one function, each type of 6G CU corresponds to one service, each type of 6G CU corresponds to one task, each type of 6G CU corresponds to one protocol stack, or each type of 6G CU corresponds to one data type.

It is to be noted that the 6G CU in Example 4 does not adopt an architecture in which a user plane and a control plane are separated, and each 6G CU is connected to one corresponding 6G DU.

It is to be noted that in FIG. 6, the 6GC may be replaced with a 5GC, any one of the n 6G DUs may be replaced with a 5G DU, or any one of the n 6G CUs may be replaced with a 5G CU.

### Example 5

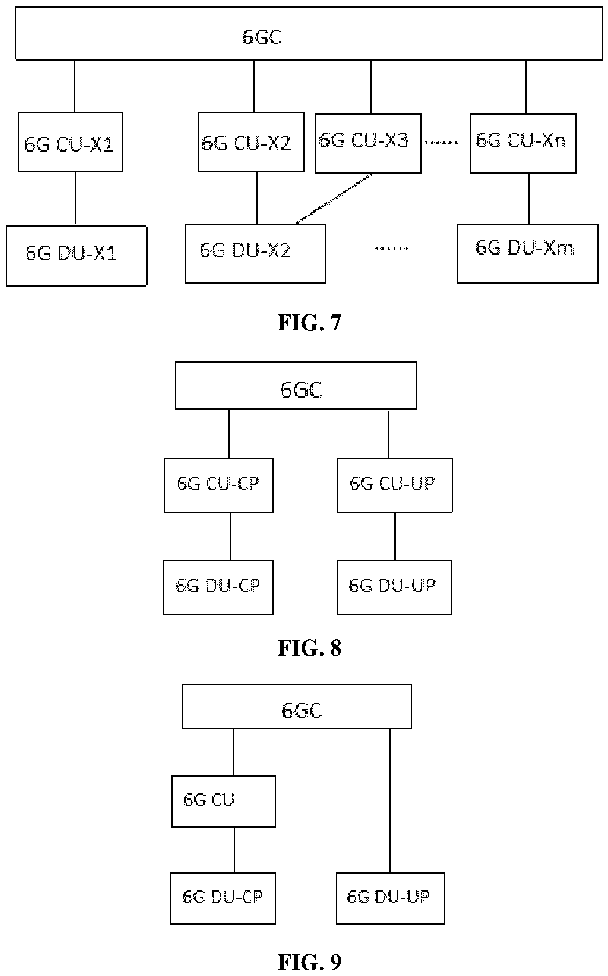

Reference is made to FIG. 7 which is a structural diagram of a communication system according to Example 5 of the present application. In the communication system shown in FIG. 7, a core network is a 6GC, and an access network includes a 6G DU and a 6G CU. Further, the number of 6G DUs is m (m > 1), and m 6G DUs are 6G DU-X1, 6G DU-X2, ..., and 6G DU-Xm, respectively; and the number of 6G CUs is n (n > m), and n 6G CUs are 6G CU-X1, 6G CU-X2, ..., and 6G CU-Xn, respectively. 6G DU-X1 is connected to 6G CU-X1, 6G DU-X2 is separately connected to 6G CU-X2 and 6G CU-X3, 6G DU-Xm is connected to 6G CU-Xn, and each 6G CU is connected to the 6GC.

It is to be noted that the 6G CU in Example 5 does not adopt an architecture in which a user plane and a control plane are separated. One 6G DU is connected to one or more 6G CUs, that is to say, multiple 6G CUs may share one 6G DU.

The n 6G CUs in Example 5 may correspond to r types, where 1 < r ≤ n. Each type of 6G CU corresponds to one function, each type of 6G CU corresponds to one service, each type of 6G CU corresponds to one task, each type of 6G CU corresponds to one protocol stack, or each type of 6G CU corresponds to one data type.

It is to be noted that in FIG. 7, the 6GC may be replaced with a 5GC, any one of the m 6G DUs may be replaced with a 5G DU, or any one of the n 6G CUs may be replaced with a 5G CU.

### Example 6

Reference is made to FIG. 8 which is a structural diagram of a communication system according to Example 6 of the present application. In the communication system shown in FIG. 8, a core network is a 6GC, and an access network includes a 6G DU and a 6G CU. Further, the 6G DU adopts an architecture in which a user plane and a control plane are separated and includes a 6G DU-CP and a 6G DU-UP; and the 6G CU also adopts the architecture in which the user plane and the control plane are separated and includes a 6G CU-CP and a 6G CU-UP. The 6G DU-CP is connected to the 6G CU-CP, the 6G DU-UP is connected to the 6G CU-UP, and the 6G CU-CP and the 6G CU-UP are separately connected to the 6GC.

It is to be understood that the DU is not divided into the control plane and the user plane in the related art; however, in embodiments of the present application, considering that the control plane and the user plane may correspond to different coverage ranges in the future, for example, the control plane may be located within a larger coverage range and the user plane may be located in a more focused small range, the DU adopts the architecture in which the user plane and the control plane are separated.

It is to be noted that in FIG. 8, the 6G CU-CP and the 6G CU-UP may be connected via an interface or may not be connected. In FIG. 8, the 6G DU-CP and the 6G DU-UP may be connected via an interface or may not be connected.

It is to be understood that the communication system may include the 6G CU-CP, 6G CU-UP, 6G DU-CP, and 6G DU-UP of different types. For example, the 6G CU-CP includes a communication 6G CU-CP and a sensing 6G CU-CP; the 6G CU-UP includes a communication 6G CU-UP and a sensing 6G CU-UP; the 6G DU-CP includes a communication 6G DU-CP and a sensing 6G DU-CP; and the 6G DU-UP includes a communication 6G DU-UP and a sensing 6G DU-UP. The 6G CU-CP, 6G CU-UP, 6G DU-CP, and 6G DU-UP of a communication type may be connected with reference to a connection relationship in FIG. 8, and the 6G CU-CP, 6G CU-UP, 6G DU-CP, and 6G DU-UP of a sensing type may be connected with reference to the connection relationship in FIG. 8.

### Example 7

Reference is made to FIG. 9 which is a structural diagram of a communication system according to Example 7 of the present application. In the communication system shown in FIG. 9, a core network is a 6GC, and an access network includes a 6G DU and a 6G CU. Further, the 6G DU adopts an architecture in which a user plane and a control plane are separated and includes a 6G DU-CP and a 6G DU-UP. The 6G DU-CP is connected to the 6G CU, and the 6G DU-UP and the 6G CU are separately connected to the 6GC.

It is to be noted that in FIG. 9, the 6G CU and the 6G DU-UP may be connected via an interface or may not be connected. In FIG. 9, the 6G DU-CP and the 6G DU-UP may be connected via an interface or may not be connected.

It is to be noted that the 6G CU in FIG. 9 does not adopt the architecture in which the user plane and the control plane are separated.

It is to be understood that the communication system may include the 6G CU, 6G DU-CP, and 6G DU-UP of different types. For example, the 6G CU includes a communication 6G CU and a sensing 6G CU, the 6G DU-CP includes a communication 6G DU-CP and a sensing 6G DU-CP, and the 6G DU-UP includes a communication 6G DU-UP and a sensing 6G DU-UP. The 6G CU, 6G DU-CP, and 6G DU-UP of a communication type may be connected with reference to a connection relationship in FIG. 9, and the 6G CU, 6G DU-CP, and 6G DU-UP of a sensing type may be connected with reference to the connection relationship in FIG. 9.

### Example 8

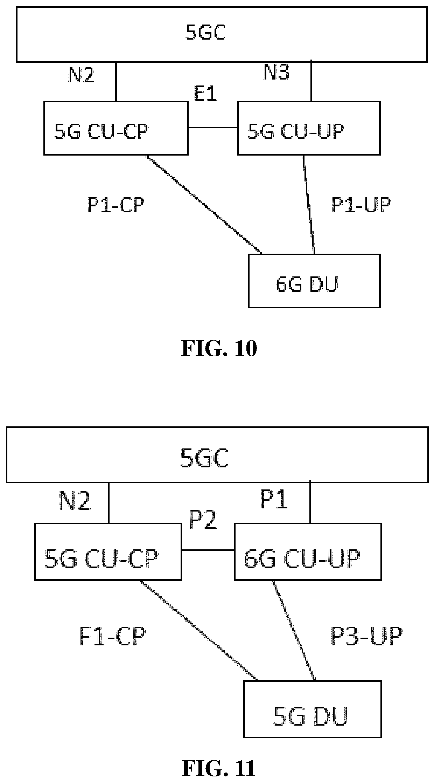

Reference is made to FIG. 10 which is a structural diagram of a communication system according to Example 8 of the present application. In the communication system shown in FIG. 10, a core network is a 5GC, and an access network includes a 6G DU and a 5G CU. Further, the 5G CU includes a 5G CU-CP and a 5G CU-UP, the 6G DU is connected to the 5G CU-CP via a P1-CP interface, the 6G DU is connected to the 5G CU-UP via a P1-UP interface, the 5G CU-CP is connected to the 5GC via an N2 interface, the 5G CU-UP is connected to the 5GC via an N3 interface, and the 5G CU-CP is connected to the 5G CU-UP via an E1 interface.

In Example 8, the core network is the 5GC, the CU adopts a 5G standard, and the DU adopts a 6G standard, so as to implement the smooth evolution from a 5G network to a 6G network.

### Example 9

Reference is made to FIG. 11 which is a structural diagram of a communication system according to Example 9 of the present application. In the communication system shown in FIG. 11, a core network is a 5GC, and an access network includes a DU and a CU. Further, the DU is a 5G DU; and the CU includes a 5G CU-CP and a 6G CU-UP. The 5G DU is connected to the 5G CU-CP via an F1-CP interface, the 5G DU is connected to the 6G CU-UP via a P3-UP interface, the 5G CU-CP is connected to the 5GC via an N2 interface, the 6G CU-UP is connected to the 5GC via a P1 interface, and the 5G CU-CP is connected to the 6G CU-UP via a P2 interface.

In Example 9, the core network is the 5GC, the CU-CP is a device adopting a 5G standard, and the CU-UP is a device adopting a 6G standard. That is to say, the CU of a NodeB adopts the deployment of a 5G node and a 6G node in a mixed manner. Additionally, the DU is also a device adopting the 5G standard, so as to implement the smooth evolution from a 5G network to a 6G network.

### Example 10

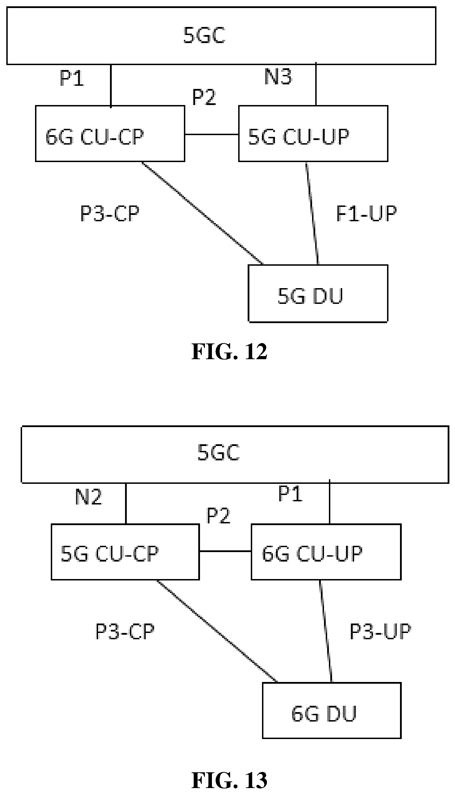

Reference is made to FIG. 12 which is a structural diagram of a communication system according to Example 10 of the present application. In the communication system shown in FIG. 12, a core network is a 5GC, and an access network includes a DU and a CU. Further, the DU is a 5G DU, and the CU includes a 6G CU-CP and a 5G CU-UP. The 5G DU is connected to the 6G CU-CP via a P3-CP interface, the 5G DU is connected to the 5G CU-UP via an F1-UP interface, the 6G CU-CP is connected to the 5GC via a P1 interface, the 5G CU-UP is connected to the 5GC via an N3 interface, and the 6G CU-CP is connected to the 5G CU-UP via a P2 interface.

In Example 10, the core network is the 5GC, the CU-CP is a device adopting a 6G standard, and the CU-UP is a device adopting a 5G standard. That is to say, the CU of a NodeB adopts the deployment of a 5G node and a 6G node in a mixed manner. Additionally, the DU is also a device adopting the 5G standard, so as to implement the smooth evolution from a 5G network to a 6G network.

### Example 11

Reference is made to FIG. 13 which is a structural diagram of a communication system according to Example 11 of the present application. In the communication system shown in FIG. 13, a core network is a 5GC, and an access network includes a DU and a CU. Further, the DU is a 6G DU, and the CU includes a 5G CU-CP and a 6G CU-UP. The 6G DU is connected to the 5G CU-CP via a P3-CP interface, the 6G DU is connected to the 6G CU-UP via a P3-UP interface, the 5G CU-CP is connected to the 5GC via an N2 interface, the 6G CU-UP is connected to the 5GC via a P1 interface, and the 5G CU-CP is connected to the 6G CU-UP via a P2 interface.

In Example 11, the core network is the 5GC, the CU-CP is a device adopting a 5G standard, and the CU-UP is a device adopting a 6G standard. That is to say, the CU of a NodeB adopts the deployment of a 5G node and a 6G node in a mixed manner, so as to implement the smooth evolution from a 5G network to a 6G network.

### Example 12

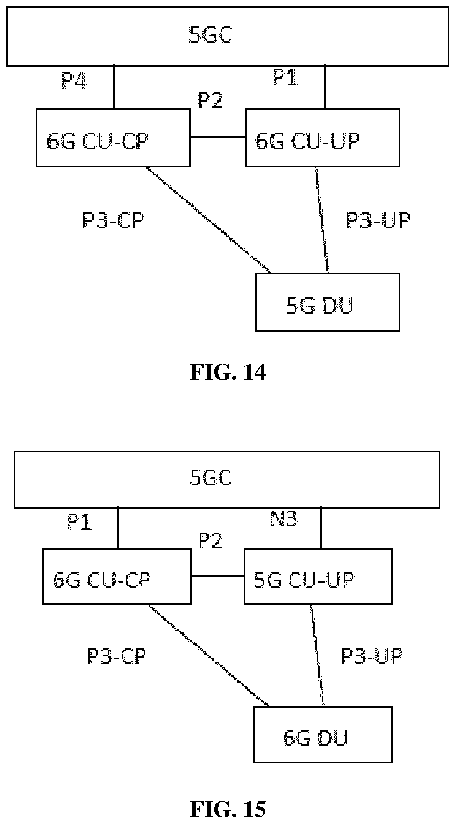

Reference is made to FIG. 14 which is a structural diagram of a communication system according to Example 12 of the present application. In the communication system shown in FIG. 14, a core network is a 5GC, and an access network includes a DU and a CU. Further, the DU is a 5G DU, and the CU includes a 6G CU-CP and a 6G CU-UP. The 5G DU is connected to the 6G CU-CP via a P3-CP interface, the 5G DU is connected to the 6G CU-UP via a P3-UP interface, the 6G CU-CP is connected to the 5GC via a P4 interface, the 6G CU-UP is connected to the 5GC via a P1 interface, and the 6G CU-CP is connected to the 6G CU-UP via a P2 interface.

In Example 12, the core network is the 5GC, the DU is a device adopting a 5G standard, and the CU-CP and the CU-UP are devices adopting a 6G standard. That is to say, a NodeB adopts the deployment of a 5G node and a 6G node in a mixed manner, so as to implement the smooth evolution from a 5G network to a 6G network.

### Example 13

Reference is made to FIG. 15 which is a structural diagram of a communication system according to Example 13 of the present application. In the communication system shown in FIG. 15, a core network is a 5GC, and an access network includes a DU and a CU. Further, the DU is a 6G DU, and the CU includes a 6G CU-CP and a 5G CU-UP. The 6G DU is connected to the 6G CU-CP via a P3-CP interface, the 6G DU is connected to the 5G CU-UP via a P3-UP interface, the 6G CU-CP is connected to the 5GC via a P1 interface, the 5G CU-UP is connected to the 5GC via an N3 interface, and the 6G CU-CP is connected to the 5G CU-UP via a P2 interface.

In Example 13, the core network is the 5GC, the CU-CP is a device adopting a 6G standard, and the CU-UP is a device adopting a 5G standard. That is to say, the CU of a NodeB adopts the deployment of a 5G node and a 6G node in a mixed manner, so as to implement the smooth evolution from a 5G network to a 6G network.

### Example 14

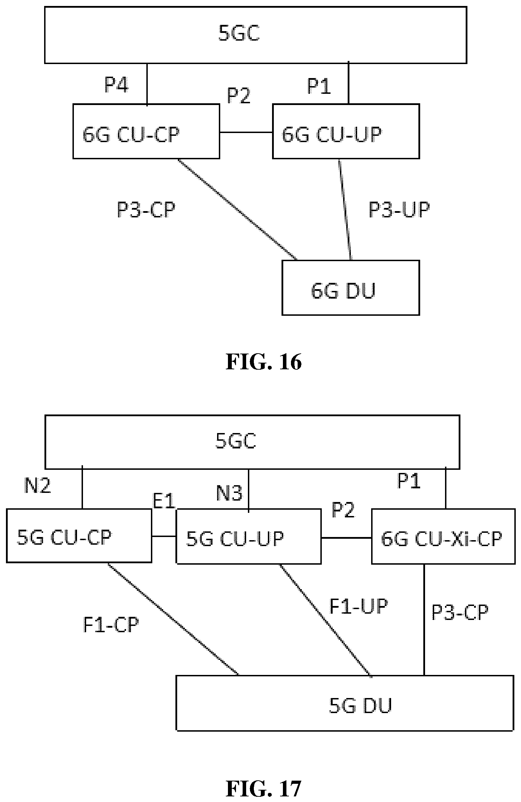

Reference is made to FIG. 16 which is a structural diagram of a communication system according to Example 14 of the present application. In the communication system shown in FIG. 16, a core network is a 5GC, and an access network includes a DU and a CU. Further, the DU is a 6G DU, and the CU includes a 6G CU-CP and a 6G CU-UP. The 6G DU is connected to the 6G CU-CP via a P3-CP interface, the 6G DU is connected to the 6G CU-UP via a P3-UP interface, the 6G CU-CP is connected to the 5GC via a P4 interface, the 6G CU-UP is connected to the 5GC via a P1 interface, and the 6G CU-CP is connected to the 6G CU-UP via a P2 interface.

In Example 14, the core network is the 5GC, and the access network is a 6G access network, so as to implement the smooth evolution from a 5G network to a 6G network.

It is to be noted that in Example 14, multiple 6G DUs/6G CU-CPs/6G CU-UPs may be provided, which correspond to multiple types. Each type of 6G DU/6G CU-CP/6G CU-UP corresponds to one function, each type of 6G DU/6G CU-CP/6G CU-UP corresponds to one service, each type of 6G DU/6G CU-CP/6G CU-UP corresponds to one task, each type of 6G DU/6G CU-CP/6G CU-UP corresponds to one protocol stack, or each type of 6G DU/6G CU-CP/6G CU-UP corresponds to one data type.

### Example 15

Reference is made to FIG. 17 which is a structural diagram of a communication system according to Example 15 of the present application. In the communication system shown in FIG. 17, a core network is a 5GC, and an access network includes a DU and a CU. Further, the DU is a 5G DU, and the CU includes a 5G CU-CP, a 5G CU-UP, and 6G CU-Xi-CP. The 5G DU is connected to the 5G CU-CP via an F1-CP interface, the 5G DU is connected to the 5G CU-UP via an F1-UP interface, the 5G DU is connected to 6G CU-Xi-CP via a P3-CP interface, the 5G CU-CP is connected to the 5GC via an N2 interface, the 5G CU-UP is connected to the 5GC via an N3 interface, 6G CU-Xi-CP is connected to the 5GC via a P1 interface, the 5G CU-CP is connected to the 5G CU-UP via an E1 interface, and the 5G CU-UP is connected to 6G CU-Xi-CP via a P2 interface.

It is to be noted that 6G CU-Xi-CP may represent one network element or multiple control network elements with different functions (i has different values, and Xi represents different network elements). The 6G CU-Xi-CP network element and the 5G CU-CP network element may be connected via an interface to collaborate with each other.

### Example 16

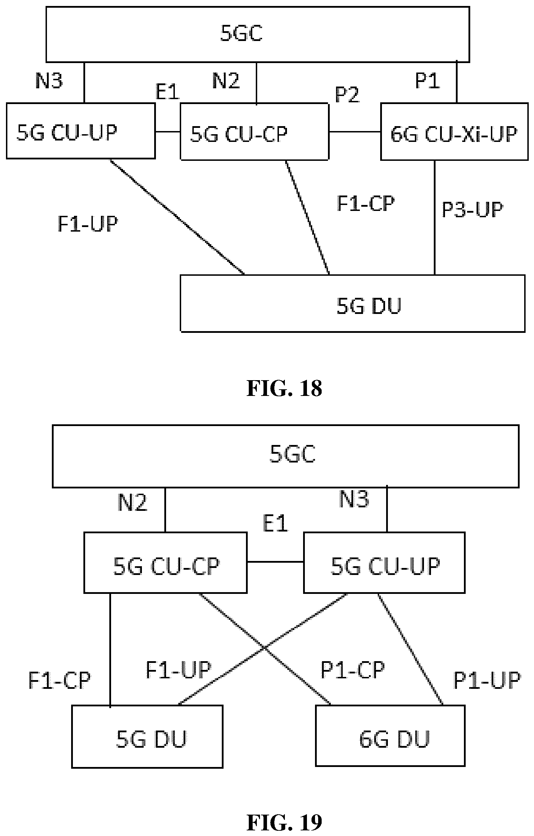

Reference is made to FIG. 18 which is a structural diagram of a communication system according to Example 16 of the present application. In the communication system shown in FIG. 18, a core network is a 5GC, and an access network includes a DU and a CU. Further, the DU is a 5G DU, and the CU includes a 5G CU-CP, a 5G CU-UP, and 6G CU-Xi-UP. The 5G DU is connected to the 5G CU-CP via an F1-CP interface, the 5G DU is connected to the 5G CU-UP via an F1-UP interface, the 5G DU is connected to 6G CU-Xi-UP via a P3-UP interface, the 5G CU-CP is connected to the 5GC via an N2 interface, the 5G CU-UP is connected to the 5GC via an N3 interface, 6G CU-Xi-UP is connected to the 5GC via a P1 interface, the 5G CU-CP is connected to the 5G CU-UP via an E1 interface, and the 5G CU-CP is connected to 6G CU-Xi-UP via a P2 interface.

It is to be noted that 6G CU-Xi-UP may represent one network element or multiple control network elements with different functions (i has different values, and Xi represents different network elements). The 6G CU-Xi-UP network element and the 5G CU-UP network element may be connected via an interface to collaborate with each other.

### Example 17

Reference is made to FIG. 19 which is a structural diagram of a communication system according to Example 17 of the present application. In the communication system shown in FIG. 19, a core network is a 5GC, and an access network includes a DU and a CU. Further, the DU includes a 5G DU and a 6G DU, and the CU includes a 5G CU-CP and a 5G CU-UP. The 5G DU is connected to the 5G CU-CP via an F1-CP interface, the 5G DU is connected to the 5G CU-UP via an F1-UP interface, the 6G DU is connected to the 5G CU-CP via a P1-CP interface, the 6G DU is connected to the 5G CU-UP via a P1-UP interface, the 5G CU-CP is connected to the 5GC via an N2 interface, the 5G CU-UP is connected to the 5GC via an N3 interface, and the 5G CU-CP is connected to the 5G CU-UP via an E1 interface.

It is to be noted that the 5G DU and the 6G DU may collaborate via a dedicated interface or through the higher-layer CU.

### Example 18

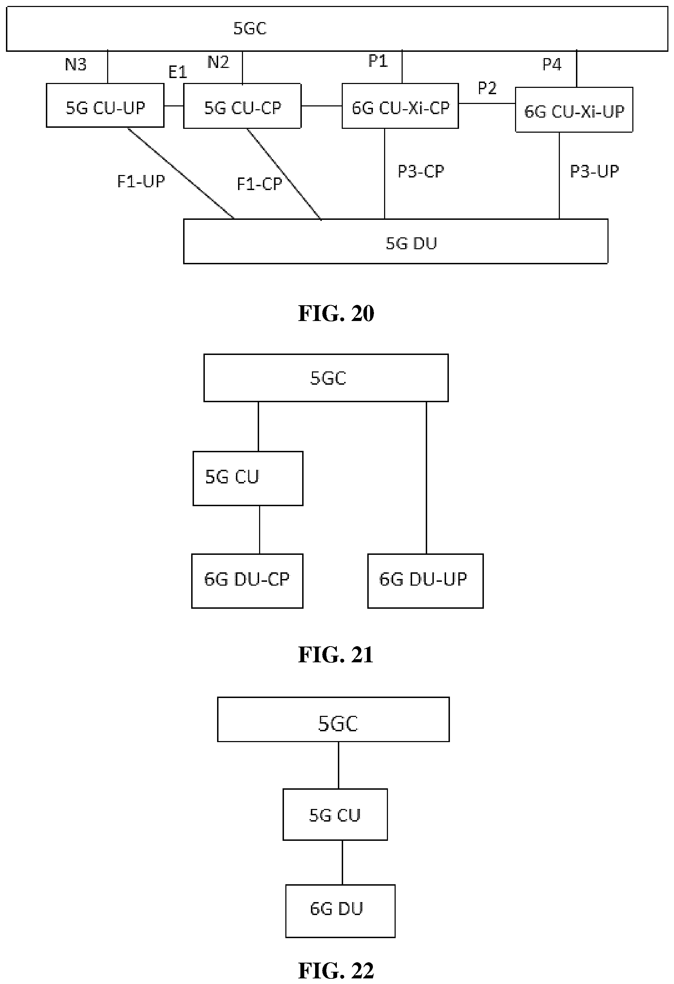

Reference is made to FIG. 20 which is a structural diagram of a communication system according to Example 18 of the present application. In the communication system shown in FIG. 20, a core network is a 5GC, and an access network includes a DU and a CU. Further, the DU is a 5G DU; and the CU includes a 5G CU-CP, a 5G CU-UP, 6G CU-Xi-CP, and 6G CU-Xi-UP.

The 5G DU is connected to the 5G CU-CP via an F1-CP interface, the 5G DU is connected to the 5G CU-UP via an F1-UP interface, the 5G DU is connected to 6G CU-Xi-CP via a P3-CP interface, the 5G DU is connected to 6G CU-Xi-UP via a P3-UP interface, the 5G CU-CP is connected to the 5GC via an N2 interface, the 5G CU-UP is connected to the 5GC via an N3 interface, 6G CU-Xi-CP is connected to the 5GC via a P1 interface, 6G CU-Xi-UP is connected to the 5GC via a P4 interface, the 5G CU-CP is connected to the 5G CU-UP via an E1 interface, and 6G CU-Xi-CP is connected to 6G CU-Xi-UP via a P2 interface.

It is to be noted that 6G CU-Xi-CP may represent one network element or multiple control network elements with different functions (i has different values, and Xi represents different network elements).

It is to be noted that 6G CU-Xi-UP may represent one network element or multiple control network elements with different functions (i has different values, and Xi represents different network elements).

It is to be noted that the 5G CU-CP and the 6G CU-CP may collaborate via a dedicated interface or collaborate through the DU or the core network without independent control via an interface; and the 5G CU-UP and the 6G CU-UP may collaborate via a dedicated interface or collaborate through one or more of the CU-CPs, DU, or core network without independent control via an interface.

### Example 19

Reference is made to FIG. 21 which is a structural diagram of a communication system according to Example 19 of the present application. In the D1 communication system shown in FIG. 21, a core network is a 5GC, and an access network includes a DU and a CU. Further, the DU includes a 6G DU-CP and a 6G DU-UP, the CU includes a 5G CU, the 6G DU-CP is connected to the 5G CU, and the 5G CU and the 6G DU-UP are separately connected to the 5GC.

In Example 19, the core network is the 5GC, the DU is a device adopting a 6G standard, and the CU is a device adopting a 5G standard. That is to say, a NodeB adopts the deployment of a 5G node and a 6G node in a mixed manner, so as to implement the smooth evolution from a 5G network to a 6G network. Additionally, the 6G DU adopts an architecture in which a user plane and a control plane are separated, and the 5G CU does not adopt the architecture in which the user plane and the control plane are separated, providing a flexible networking manner and adapting to a requirement of the 6G network.

It is to be noted that in FIG. 21, the SGC may be replaced with a 6GC.

### Example 20

Reference is made to FIG. 22 which is a structural diagram of a communication system according to Example 20 of the present application. In the communication system shown in FIG. 22, a core network is a 5GC, an access network includes a DU and a CU, the DU is a 6G DU, the CU is a 5G CU, and the 6G DU is connected to the SGC via the 5G CU.

In Example 20, the core network is the 5GC, the DU is a device adopting a 6G standard, and the CU is a device adopting a 5G standard. That is to say, a NodeB adopts the deployment of a 5G node and a 6G node in a mixed manner, so as to implement the smooth evolution from a 5G network to a 6G network.

It is to be noted that in FIG. 22, the SGC may be replaced with a 6GC.

### Example 21

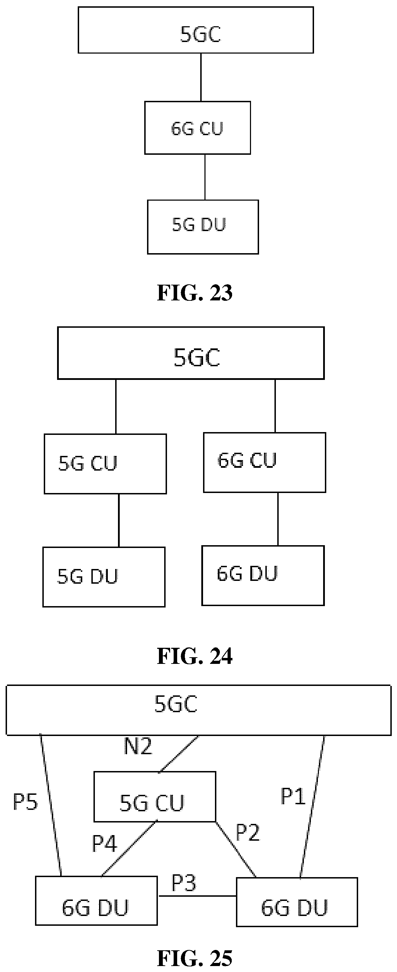

Reference is made to FIG. 23 which is a structural diagram of a communication system according to Example 21 of the present application. In the communication system shown in FIG. 23, a core network is a 5GC, an access network includes a DU and a CU, the DU is a 5G DU, the CU is a 6G CU, and the 5G DU is connected to the SGC via the 6G CU.

In Example 21, the core network is the 5GC, the DU is a device adopting a 5G standard, and the CU is a device adopting a 6G standard. That is to say, a NodeB adopts the deployment of a 5G node and a 6G node in a mixed manner, so as to implement the smooth evolution from a 5G network to a 6G network.

It is to be noted that in FIG. 23, the SGC may be replaced with a 6GC.

### Example 22

Reference is made to FIG. 24 which is a structural diagram of a communication system according to Example 22 of the present application. In the communication system shown in FIG. 24, a core network is a 5GC, and an access network includes a DU and a CU. Further, the DU includes a 5G DU and a 6G DU, the CU includes a 5G CU and a 6G CU, the 5G DU is connected to the 5GC via the 5G CU, and the 6G DU is connected to the 5GC via the 6G CU.

In Example 22, the 5G CU and the 6G CU coexist for different traffic, different functions, or different protocol stack architectures. The 5G CU and the 6G CU coexist for joint transmission to ensure performance and provide more external functional services.

It is to be noted that in FIG. 24, the 5GC may be replaced with a 6GC.

### Example 23

Reference is made to FIG. 25 which is a structural diagram of a communication system according to Example 23 of the present application. In the communication system shown in FIG. 25, a core network is a 5GC, and an access network includes a DU and a CU. Further, the DU includes multiple 6G DUs, the CU includes a 5G CU, the multiple 6G DUs are connected to the 5G CU, and the 5G CU and each 6G DU are separately connected to the 5GC.

It is to be noted that the 6G DUs may be connected to each other via a dedicated interface or may not be connected.

It is to be understood that the multiple 6G DUs here may correspond to multiple types. For example, each type of DU corresponds to one function, each type of DU corresponds to one service, each type of DU corresponds to one task, each type of DU corresponds to one protocol stack, or each type of DU corresponds to one data type.

### Example 24

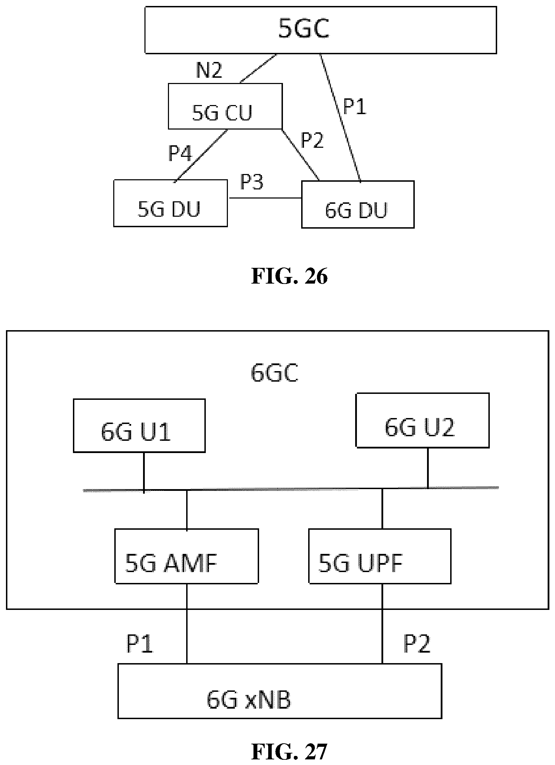

Reference is made to FIG. 26 which is a structural diagram of a communication system according to Example 24 of the present application. In the communication system shown in FIG. 26, a core network is a 5GC, and an access network includes a DU and a CU. Further, the DU includes a 5G DU and a 6G DU, the CU includes a 5G CU, the 5G DU and the 6G DU are both connected to the 5G CU, and the 5G CU and the 6G DU are separately connected to the 5GC.

It is to be noted that the 5G DU and the 6G DU may be connected via a dedicated interface or may not be connected.

### Example 25

Reference is made to FIG. 27 which is a structural diagram of a communication system according to Example 25 of the present application. In the communication system shown in FIG. 27, a core network is a 6GC, and an access network is a 6G access network (6G xNodeB (6G xNB)). The 6GC includes a 6G core network element and a 5G core network element. For example, the 6G core network element includes 6G U1 and 6G U2, where specific functions corresponding to 6G U1 and 6G U2 are not limited in this example; and the 5G core network element includes a 5G AMF and a 5G UPF. The 6G xNB is connected to the 5G AMF and the 5G UPF, and 6G U1, 6G U2, the 5G AMF, and the 5G UPF are connected via a service bus.

It is to be noted that the 6G xNB may adopt the architecture of the access network described in any one of Examples 1 to 24 described above.

### Example 26

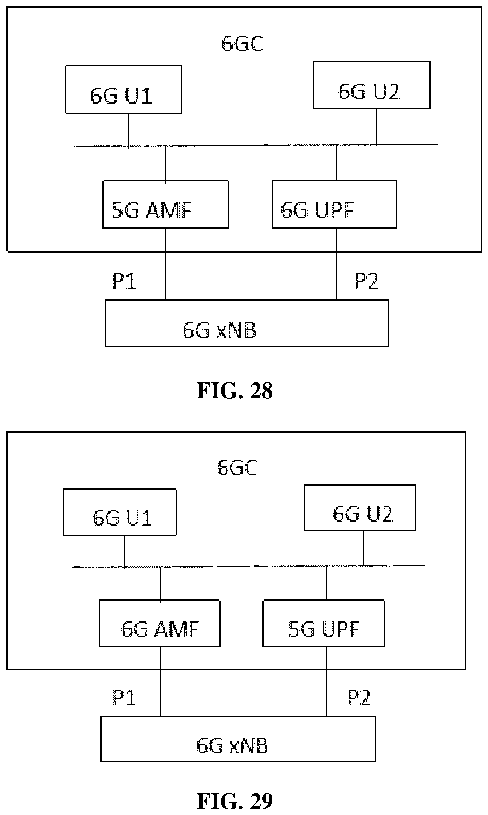

Reference is made to FIG. 28 which is a structural diagram of a communication system according to Example 26 of the present application. In the communication system shown in FIG. 28, a core network is a 6GC, and an access network includes a 6G xNB. The 6GC includes a 6G core network element and a 5G core network element. For example, the 6G core network element includes 6G U1, 6G U2, and a 6G UPF, where specific functions corresponding to 6G U1 and 6G U2 are not limited in this example; and the 5G core network element includes a 5G AMF. The 6G xNB is connected to the 5G AMF and the 6G UPF, and 6G U1, 6G U2, the 5G AMF, and the 6G UPF are connected via a service bus.

It is to be noted that the 6G xNB may adopt the architecture of the access network described in any one of Examples 1 to 24 described above.

### Example 27

Reference is made to FIG. 29 which is a structural diagram of a communication system according to Example 27 of the present application. In the communication system shown in FIG. 29, a core network is a 6GC, and an access network includes a 6G xNB. The 6GC includes a 6G core network element and a 5G core network element. For example, the 6G core network element includes 6G U1, 6G U2, and a 6G AMF, where specific functions corresponding to 6G U1 and 6G U2 are not limited in this example; and the 5G core network element includes a 5G UPF. The 6G xNB is connected to the 6G AMF and the 5G UPF, and 6G U1, 6G U2, the 6G AMF, and the 5G UPF are connected via a service bus.

It is to be noted that the 6G xNB may adopt the architecture of the access network described in any one of Examples 1 to 24 described above.

### Example 28

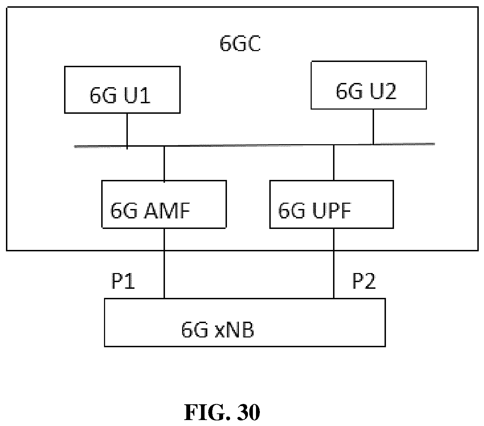

Reference is made to FIG. 30 which is a structural diagram of a communication system according to Example 28 of the present application. In the communication system shown in FIG. 30, a core network is a 6GC, and an access network includes a 6G xNB. The 6GC includes a 6G core network element. For example, the 6G core network element includes 6G U1, 6G U2, a 6G AMF, and a 6G UPF, where specific functions corresponding to 6G U1 and 6G U2 are not limited in this example. The 6G xNB is connected to the 6G AMF and the 6G UPF.

It is to be noted that the 6G xNB may adopt the architecture of the access network described in any one of Examples 1 to 24 described above.

The access network and the communication system according to the embodiments of the present application follow a logical system of separation of the CU and the DU in the previous 5G communication network, the CU may include multiple types of CUs, and the DU may include multiple types of DUs. If the CU and the DU are each of only one type, the CU and the DU correspond to different types. The solutions in the embodiments of the present application effectively improve the flexibility and functionality of the communication system and can adapt to requirements of 6G standards and achieve the smooth evolution towards 6G network standards.

Terms such as "first", "second", "third", and "fourth" (if present) in the description and drawings of the present application are used to distinguish between similar objects and are not necessarily used to describe a particular order or sequence. It is to be understood that data used in this manner are interchangeable where appropriate so that the embodiments of the present application described herein, for example, can be implemented in an order not illustrated or described herein. Additionally, terms "comprising", "including", and any other variations thereof are intended to encompass a non-exclusive inclusion. For example, a process, method, system, product, or apparatus that includes a series of steps or units not only includes the expressly listed steps or units but may also include other steps or units that are not expressly listed or are inherent to such process, method, product, or apparatus.

It is to be understood that in the present application, "at least one" refers to one or more, and "multiple" refers to two or more. "And/or" is used to describe an association relationship between associated objects and indicates the presence of three relationships. For example, "A and/or B" may indicate three cases where only A exists, only B exists, and both A and B exist, where A and B may be singular or plural. The character "/" generally indicates an "or" relationship between associated objects before and after the character. "At least one of the following items" or a similar expression refers to any combination of these items, including any combination of a single item or multiple items. For example, at least one of a, b, or c may refer to a, b, c, "a and b", "a and c", "b and c", or "a and b and c", where a, b, and c may each be singular or plural.

Technical features in the preceding embodiments may be combined in any manner. For brevity of description, not all possible combinations of the technical features in the preceding embodiments are described. However, if not in conflict, any combinations of these technical features are to be considered within the scope of the specification.

The preceding embodiments are merely several embodiments of the present application. Although they are described in detail, the preceding embodiments cannot be construed as limiting the scope of the present application. It is to be noted that several improvements and modifications can be made by those having ordinary skill in the art without departing from the spirit of the present application, which are within the scope of the present application.

## Claims

1. An access network, comprising:
a centralized unit, CU, and a distributed unit, DU, being connected to the CU; and the CU comprising at least one type of CU and the DU comprising at least one type of DU; wherein,
the CU and the DU correspond to different types in response to the CU and the DU being each of only one type; or
the CU comprises a plurality of types of CUs; or
the DU comprises a plurality of types of DUs.

2. The access network of claim 1, wherein the CU comprises at least one of a 6G CU or a 5G CU.

3. The access network of claim 2, wherein the DU comprises a 6G DU, the CU comprises the 6G CU and the 5G CU, and the 6G DU is separately connected to the 6G CU and the 5G CU.

4. The access network of claim 3, wherein the 6G CU comprises at least one 6G centralized unit control plane, CU-CP, the 5G CU comprises a 5G centralized unit user plane, CU-UP, the at least one 6G CU-CP is connected to the 5G CU-UP, and the 6G DU is separately connected to the at least one 6G CU-CP and the 5G CU-UP.

5. The access network of claim 3, wherein the 6G CU comprises at least one 6G CU-UP, the 5G CU comprises a 5G CU-CP, the at least one 6G CU-UP is connected to the 5G CU-CP, and the 6G DU is separately connected to the at least one 6G CU-UP and the 5G CU-CP.

6. The access network of claim 3, wherein the 6G CU comprises at least one 6G CU-CP and at least one 6G CU-UP, the 5G CU comprises a 5G CU-CP and a 5G CU-UP, the at least one 6G CU-CP is connected to the at least one 6G CU-UP, the 5G CU-CP is connected to the 5G CU-UP, and the 6G DU is separately connected to the at least one 6G CU-CP, the at least one 6G CU-UP, the 5G CU-CP, and the 5G CU-UP.

7. The access network of claim 6, wherein at least one of the following is satisfied:
the at least one 6G CU-CP is connected to the 5G CU-CP; or
the at least one 6G CU-UP is connected to the 5G CU-UP.

8. The access network of claim 3, wherein the DU comprises a 5G DU, and the 5G DU is separately connected to the 6G CU and the 5G CU.

9. The access network of claim 8, wherein the 6G CU comprises at least one 6G CU-CP, the 5G CU comprises a 5G CU-UP, the at least one 6G CU-CP is connected to the 5G CU-UP, and the 5G DU is separately connected to the at least one 6G CU-CP and the 5G CU-UP.

10. The access network of claim 8, wherein the 6G CU comprises at least one 6G CU-UP, the 5G CU comprises a 5G CU-CP, the at least one 6G CU-UP is connected to the 5G CU-CP, and the 5G DU is separately connected to the at least one 6G CU-UP and the 5G CU-CP.

11. The access network of claim 8, wherein the 6G CU comprises at least one 6G CU-CP and at least one 6G CU-UP, the 5G CU comprises a 5G CU-CP and a 5G CU-UP, the at least one 6G CU-CP is connected to the at least one 6G CU-UP, the 5G CU-CP is connected to the 5G CU-UP, and the 5G DU is separately connected to the at least one 6G CU-CP, the at least one 6G CU-UP, the 5G CU-CP, and the 5G CU-UP.

12. The access network of claim 1, wherein the DU comprises at least one of a 6G DU or a 5G DU.

13. The access network of claim 12, wherein the DU comprises the 6G DU, and the 6G DU comprises a 6G distributed unit control plane, DU-CP, and a 6G distributed unit user plane, DU-UP.

14. The access network of claim 13, wherein the CU comprises a 5G CU, the 5G CU comprises a 5G CU-CP and a 5G CU-UP, the 6G DU-CP is connected to the 5G CU-CP, and the 6G DU-UP is connected to the 5G CU-UP.

15. The access network of claim 13, wherein the CU comprises a 6G CU, the 6G CU comprises a 6G CU-CP and a 6G CU-UP, the 6G DU-CP is connected to the 6G CU-CP, and the 6G DU-UP is connected to the 6G CU-UP.

16. The access network of claim 13, wherein the 6G DU-CP is connected to a core network via a 5G CU or a 6G CU, and the 6G DU-UP is connected to the core network.

17. The access network of claim 1, wherein each type of CU corresponds to one function, each type of CU corresponds to one service, each type of CU corresponds to one task, each type of CU corresponds to one protocol stack, each type of CU corresponds to one data type, or each type of CU corresponds to one network standard type.

18. The access network of claim 1, wherein,
the CU comprises a CU with a first function and a CU with a second function; or
the CU comprises a main CU and an auxiliary CU; or
the CU comprises an external type of CU and an internal type of CU; wherein the external type of CU is configured to perform information interaction with a user equipment, UE, and the internal type of CU performs no information interaction with the UE; or wherein the external type of CU is related to a communication service, and the internal type of CU is related to another service; or wherein the external type of CU is related to an external service provided by a core network, and the internal type of CU is related to a UE service.

19. The access network of claim 1, wherein each type of DU corresponds to one function, each type of DU corresponds to one service, each type of DU corresponds to one task, each type of DU corresponds to one protocol stack, each type of DU corresponds to one data type, or each type of DU corresponds to one network standard type.

20. The access network of claim 1, wherein,
the DU comprises a DU with a first function and a DU with a second function; or
the DU comprises a main DU and an auxiliary DU; or
the DU comprises an external type of DU and an internal type of DU; wherein the external type of DU is configured to perform information interaction with a UE, and the internal type of DU performs no information interaction with the UE; or wherein the external type of DU is related to a communication service, and the internal type of DU is related to another service; or wherein the external type of DU is related to an external service provided by a core network, and the internal type of DU is related to a UE service.

21. The access network of claim 1, wherein,
a number of types of the CU and a number of types of the DU are the same; or a number of types of the DU is smaller than a number of types of the CU; and
each type of DU is connected to at least one type of CU.

22. The access network of claim 1, wherein,
the DU comprises the plurality of types of DUs in response to the CU comprising only one type of CU; or
the CU comprises the plurality of types of CUs in response to the DU comprising only one type of DU.

23. A communication system, comprising a core network and the access network of any one of claims 1 to 22, the access network being connected to the core network.

24. The communication system of claim 23, wherein the core network comprises at least one of a 5G core network element or a 6G core network element.

25. The communication system of claim 24, wherein the 5G core network element comprises at least one of a 5G Access and Mobility Management Function, AMF, network element, a 5G User Plane Function, UPF, network element, a 5G Session Management Function, SMF, network element, a 5G unified data management, UDM, network element, a 5G network repository function, NRF, or a 5G network exposure function, NEF.
